# EUROPÄISCHE PATENTSCHRIFT

(11) **EP 2 764 952 B1**
(45) Veröffentlichungstag und Bekanntmachung des Hinweises auf die Patenterteilung: **13.09.2017**
(21) Anmeldenummer: 14153247.3
(22) Anmeldetag: 30.01.2014
(51) Int. Cl.: B23Q 1/00

(54) **Spannaufnahme**
Clamping holder
Porte-pièces

(30) Priorität: 07.02.2013 DE 102013201994
(43) Veröffentlichungstag der Anmeldung: 13.08.2014
(73) Patentinhaber: Schunk GmbH & Co. KG Spann- und Greiftechnik, 74348 Lauffen am Neckar (DE)
(72) Erfinder: Schräder, Philipp, 88512 Mengen (DE); Kleiner, Markus, 88605 Messkirch (DE); Michelberger, Markus, 88367 Hohentengen (DE); Heinzler, Roland, 88367 Hohentengen (DE)
(74) Vertreter: DREISS Patentanwälte PartG mbB

(56) Entgegenhaltungen:
- EP-A1- 1 428 611
- DE-A1- 10 317 336
- DE-A1- 10 317 344
- DE-A1-102004 020 228
- DE-C1- 3 729 601
- GB-A- 2 462 132

## Beschreibung

Die Erfindung betrifft eine Spannaufnahme eines Spannsystems, insbesondere eine Nullpunktspannaufnahme eines Nullpunktspannsystems.

Mit derartigen Spannaufnahmen werden Gegenstände, insbesondere Spannmodule oder Werkstücke, reproduzierbar positionsgenau gespannt. Dazu weisen solche Spannaufnahmen ein Grundgehäuse auf und eine im Grundgehäuse vorgesehene Einführöffnung zum Einführen eines am dem zu spannenden Gegenstand anordenbaren Spannbolzens. Im Grundgehäuse sind in radialer Richtung verlagerbare Verriegelungselemente vorgesehen, die dazu dienen, den Spannbolzen in die Einführöffnung einzuziehen und ihn dort in einer Verriegelungslage zu verriegeln. Am Grundgehäuse sind ferner Anlageabschnitte zur Anlage des Gegenstandes in der Verriegelungslage vorgesehen.

Derartige Spannaufnahmen sind beispielsweise aus der DE 10 2010 007 924 A1 vorbekannt. Bei diesen Spannaufnahmen sind die Anlageabschnitte zur Anlage des Gegenstandes an der Spannaufnahme als schräg zur Mittellängsachse der Spannaufnahme verlaufende Anlageflächen ausgebildet.

Es hat sich gezeigt, dass bei längerem Einsatz derartiger Spannaufnahmen, insbesondere nach mehreren hundert Spannzyklen, ein reproduzierbares, positionsgenaues Spannen der Gegenstände nicht immer erzielt werden konnte.

Aus der DE 103 17 344 A1, der DE 37 29 601 C1, der EP 1 428 611 A1, der GB 2 462 132 A und der DE 10 2004 020228 A1 sind verschiedene Spannsysteme bekannt. Bei dem aus der DE 103 17 344 A1 bekannten System ist ein Grundgehäuse vorgesehen, dass aus einem Gehäusebauteil und einem Deckelbauteil besteht, wobei der zu spannende Gegenstand am Deckelbauteil zum Anliegen kommt.

Der vorliegenden Erfindung liegt deshalb die Aufgabe zugrunde, vorbekannte Spannaufnahmen derart weiterzubilden, dass deren Lebensdauer verlängert wird und insbesondere auch noch nach einer großen Anzahl von Spannzyklen ein positionsgenaues Spannen ermöglicht wird.

Diese Aufgabe wird mit einer Spannaufnahme mit den Merkmalen des Anspruchs 1 gelöst. Die erfindungsgemäße Spannaufnahme zeichnet sich folglich dadurch aus, dass wenigstens ein Anlageabschnitt als vom Grundkörper separat hergestelltes Anlagebauteile derart ausgebildet ist, dass es wenigstens abschnittsweise aus einem Material besteht, das härter ist als das Material des Grundgehäuses. Ferner ist vorteilhaft, dass das Anlagebauteil, vorzugsweise sämtliche Anlagebauteile, wenigstens geringfügig über die Oberfläche des Grundgehäuses überstehen. Dadurch kann sichergestellt werden, dass die Anlage des Gegenstands tatsächlich an den Anlagebauteilen erfolgt und es kann in den Bereichen, in denen der Gegenstand, also in erster Linie das Spannmodul oder das Werkstück, am Grundgehäuse zum Anliegen kommt, Verschleiß verhindert werden. Dadurch kann gewährleistet werden, dass auch nach mehreren hundert Spannzyklen ein positionsgenaues Anliegen des Gegenstandes am Grundgehäuse, und damit ein positionsgenaues Spannen, möglich bleibt.

In vorteilhafter Weise ist das Grundgehäuse aus Aluminium und sind die Anlagebauteile vollständig aus gehärtetem Stahl.

Um ein positionsgenaues Spannen zu ermöglichen ist zudem vorteilhaft, wenn wenigstens ein Anlagebauteil einen Einführkonus zur Einführung des Spannbolzens oder eines am Gegenstand angeordneten Zentrierbolzens aufweist. Insbesondere dann, wenn beim Einführen des Spannbolzens oder eines Zentrierbolzens eine Zentrierung über einen Konus erreicht wird, treten an den Kontaktflächen Querkräfte auf, die zu Verschleiß führen können. Dadurch, dass die Anlagebauteile im Bereich der Einführkonusse eine geeignete Härte aufweisen, wird das Entstehen von Verschleiß verhindert oder zumindest verringert.

Die Anlagebauteile können dabei in am Grundgehäuse vorgesehene Ausnehmungen eingeschraubt, eingepresst und/oder eingeklebt sein. Als vorteilhaft hat sich eine Kombination von Einkleben und Einpressen oder von Einkleben und Einschrauben erwiesen.

Zur Vermeidung, dass sich Medien, wie insbesondere Späne, an den Anlagebauteile ansammeln und ein positionsgenaues Spannen beeinträchtigen, kann vorgesehen sein, dass an den Anlagebauteilen Luftleitungen vorgesehen sind, durch welche Druckluft zum Freiblasen des dem Gegenstand zugewandten Bereichs des Anlagebauteils leitbar ist.

Dazu ist vorteilhaft, wenn auf der axial unteren Seite des Anlagebauteils mit einer Luftleitung korrespondierende Einlassöffnungen vorgesehen sind. Ferner ist vorteilhaft, wenn auf der axialen Oberseite, oder bei Vorsehen eines Ringelements, auf der radialen Innenseite, mit den Lufteinlassöffnungen verbundene Luftauslassöffnungen vorgesehen sind.

Die Anlagebauteile als solche können insbesondere ring-, hülsen-, stift- oder kappenartig ausgebildet sein. Bei der Verwendung von Kappen hat es sich als vorteilhaft herausgestellt, wenn diese an ihrer Oberseite ein Entlüftungsloch aufweisen, so dass beim Fügen der Kappe mit dem Grundgehäuse zwischen der Kappe und dem Grundgehäuse vorhandene Luft entweichen kann.

Besonders vorteilhaft ist, wenn ein Anlagebauteil von einem am Grundkörper angeordneten, die Einführöffnung des Spannbolzens umgebenden Ringelement gebildet wird. Insbesondere beim Einführen des Spannbolzens in die Einführöffnung kann ein Kontaktieren des Spannbolzens der Einführöffnung auftreten. Dabei können vergleichsweise hohe Querkräfte auftreten, die zu Verschleiß und zu Beschädigungen im Bereich der Einführöffnung führen können. Durch Vorsehen des Ringelements aus vergleichsweise hartem Material kann hier Verschleiß effektiv verringert oder verhindert werden.

Das Ringelement kann dabei insbesondere ein Gewinde aufweisen, mit welchem es in das Grundgehäuse, welches ein entsprechendes Gegengewinde aufweist, eingeschraubt sein kann.

Die eingangs genannte Aufgabe wir auch gelöst durch eine Spannaufnahme mit den Merkmalen des Anspruchs 10. Dabei ist vorgesehen, dass das wenigstens ein Anlagebauteil von einem am Grundgehäuse angeordneten, die Einführöffnung umgebenden Ringelement gebildet ist, wobei das Ringelement mittels eines Gewindes in das Grundgehäuse eingeschraubt ist. Das Ringelement kann dabei aus dem gleichen Materiela wie das Grundgehäuse oder aus einem härteren Material als das Grundgehäuse sein.

Das Einschrauben kann dabei vorzugsweise so erfolgen, dass das Gehäuse im Bereich des Ringelements elastisch nachgiebig vorgespannt wird. Je nach Materialkombination von Ringelement und Gehäuse sind entsprechende Einschraubdrehmomente vorzusehen. Dabei ist vorteilhaft, wenn die aus der Vorspannung resultierende Vorspannkraft größer ist als eine aus der Einzugskraft, also beim Einziehen des Spannelements in die Einführöffnung, resultierende Gegenkraft. Dadurch kann erreicht werden, dass das Grundgehäuse beim Einziehen des Spannbolzens in die Einführöffnung nicht elastisch nachgiebig verformt wird. Hierdurch kann die Reproduktionsgenauigkeit des Spannens erhöht werden.

Das Ringelement als solches kann dabei so ausgebildet sein, dass es zum Einschrauben in den Grundkörper im radial inneren Bereich einen Schlüsselabschnitt zum Ansetzen eines Werkzeugs aufweist, wobei nach erfolgtem Einschrauben des Ringelements dieser Schlüsselabschnitt entfernt, beispielsweise herausgedreht oder herausgefräst, werden kann. Das Vorsehen eines solchen Schlüsselabschnitts hat den Vorteil, dass vergleichsweise hohe Drehmomente beim Einschrauben des Ringelements in das Grundgehäuse realisiert werden können. Nach Einschrauben des Ringelements kann der Schlüsselabschnitt entfernt werden, da das Ringelement im Grundgehäuse verbleibt.

Weitere Einzelheiten und vorteilhafte Ausgestaltungen der Erfindung sind der nachfolgenden Beschreibung zu entnehmen, in der ein Ausführungsbeispiel näher erläutert und beschrieben wird.

Es zeigen:
- Figur 1: eine Spannaufnahme mit einem Spannbolzen als Einzelteil;
- Figur 2: die Spannaufnahme nach Figur 1 mit einem den Spannbolzen aus Figur 1 vorsehenden zu spannenden Gegenstand;
- Figur 3: einen Längsschnitt durch die Spannaufnahme nach Figur 1;
- Figur 4: einen Querschnitt durch die Spannaufnahme nach Figur 3 entlang der Linie IV;
- Figur 5: einen Querschnitt durch die Spannaufnahme nach Figur 3 entlang der Linie V;
- Figur 6: ein kappenartig ausgebildetes Anlagebauteil in verschiedenen Ansichten und
- Figur 7: ein als Ringelement ausgebildetes Anlagebauteile in verschiedenen Ansichten

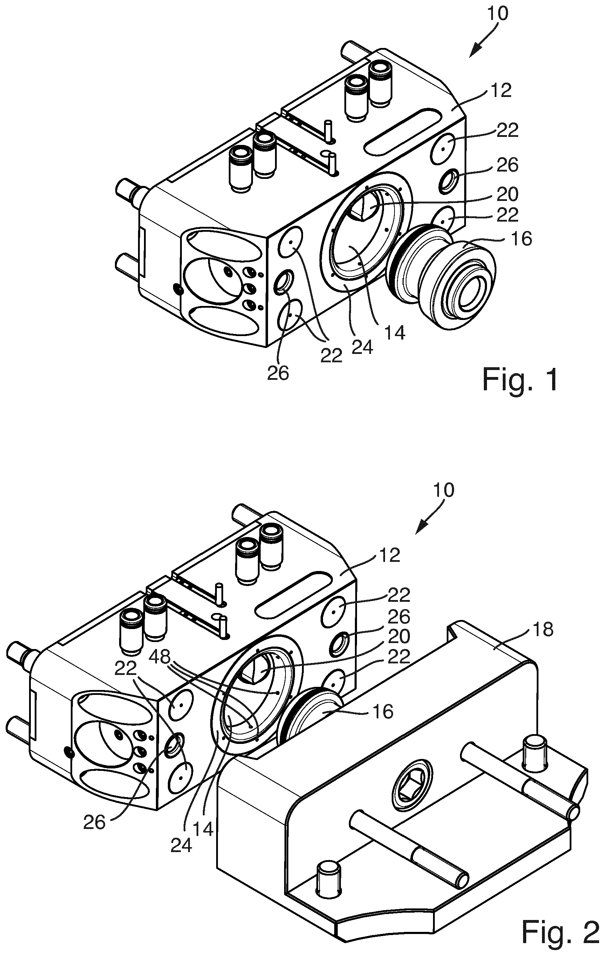

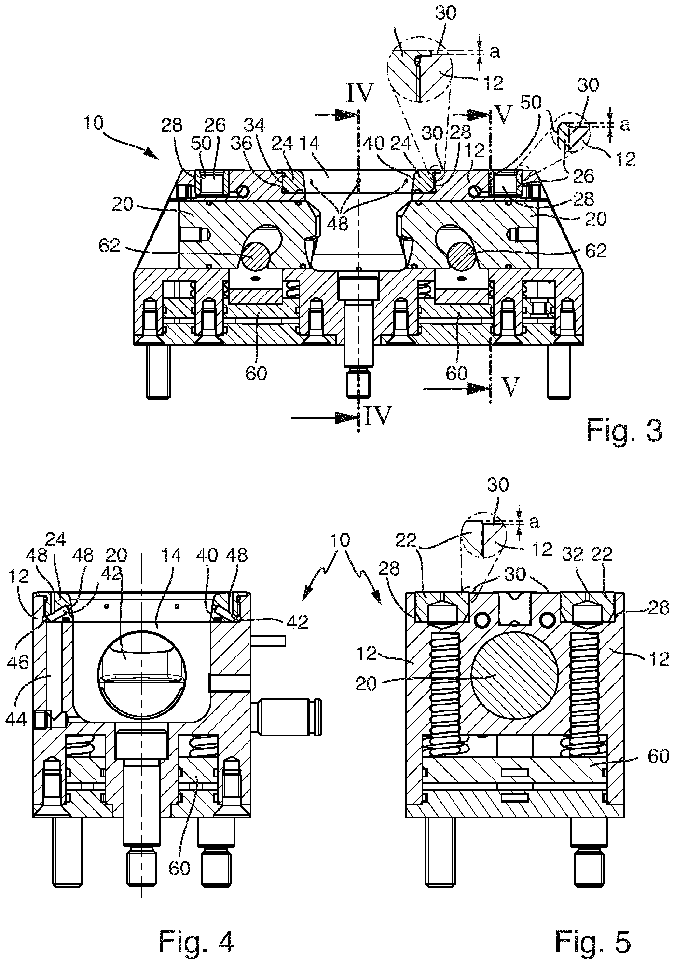

In der Figur 1 ist eine Spannaufnahme 10 eines Nullpunktspannsystems dargestellt. Die Spannaufnahme 10 umfasst ein Grundgehäuse 12 sowie eine im Grundgehäuse 12 vorgesehene Einführöffnung 14. Die Einführöffnung 14 dient zum Einführen eines in Figur 1 dargestellten Spannbolzens 16. Der Spannbolzen 16 ist an einem zu spannenden Gegenstand 18, der in Figur 2 dargestellt ist, anordenbar. Bei dem Gegenstand 18 kann es sich um ein Spannmodul, eine Spannplatte oder auch um ein zu bearbeitendes Werkstück handeln. Zum Spannen des Gegenstandes 18 an der Spannaufnahme 10 wird der Spannbolzen 16 in die Einführöffnung 14 eingeführt. Im Grundgehäuse 12 sind Verriegelungselemente 20 vorgesehen, die - wie aus Figur 3 deutlich wird - als Schieber ausgebildet sind, die aus ihrer radial äußeren Entriegelungslage in eine radial innere Verriegelungslage verlagerbar sind. Beim Verlagern der Verriegelungselemente 20 in die radial innere Verriegelungslage wird der in die Einführöffnung 14 eingeführte Spannbolzen 16 zum einen in die Einführöffnung eingezogen und zum anderen dort verriegelt.

In den Figuren 3, 4 und 5 ist ein druckbeaufschlagbarer Kolben 60 in Spannstellung gezeigt, der über Stellglieder 62 mit den als Schieber ausgebildeten Verriegelungselementen 20 zusammenwirkt. Bei einer axialen Verlagerung des Kolbens 60 erfolgt eine radiale Verlagerung der Verriegelungselemente 20. In der Verriegelungslage liegt der Gegenstand 18 am Grundgehäuse 12 der Spannaufnahme 10 an.

Um zu gewährleisten, dass auch nach mehreren hundert Spannzyklen ein positionsgenaues Anliegen des Gegenstands 18 am Grundgehäuse 12 möglich ist, sind am Grundgehäuse 12 Anlagebauteile 22, 24, 26 vorgesehen. Die Anlagebauteile 22, 24, 26 sind vorzugsweise aus gehärtetem Stahl, wobei das Grundgehäuse 12 vorzugsweise aus einer Aluminiumlegierung besteht. Das Material der Anlagebauteile 22, 24, 26, ist härter ausgebildet als das Material des Grundgehäuses 12.

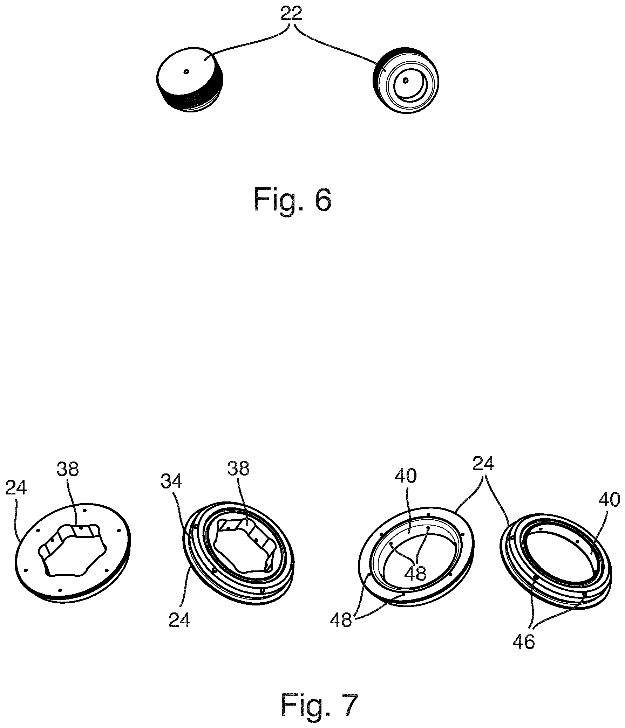

Die Anlagebauteile 22, von denen insgesamt vier vorgesehen sind, sind, wie aus Figur 5 deutlich wird, kappenartig ausgebildet. In Figur 6 ist ein kappenartiges Anlagebauteil 22 in Einzelteildarstellung in zwei unterschiedlichen Ansichten gezeigt.

Die Anlagebauteile 22 sind in am Gehäuse vorgesehenen Zylinderausnehmungen 28 eingepresst und zugleich stoffschlüssig verklebt. Wie aus dem vergrößerten Abschnitt der Figur 5 deutlich wird, stehen die Anlagebauteile 22 geringfügig über die Oberfläche 30 des Grundgehäuses 12 um das Maß a über.

Die Anlagebauteile 22 weisen in ihrem mittleren Bereich eine Entlüftungsbohrung 32, aus der Luft zur Reinigung der Oberfläche der Anlagebauteile 22 ausgeblasen werden kann. Die Anlagebauteile 22 sind insbesondere in die jeweilige Ausnehmung 28 eingepresst und zugleich stoffschlüssig verklebt.

Das Anlagebauteil 24 ist als Ringelement ausgebildet und wird in eine die Einführöffnung 14 umgebende Ausnehmung 28 des Grundgehäuses 12 eingesetzt. Das Anlagebauteil 24 steht, wie aus dem vergrößerten Ausschnitt aus Figur 3 deutlich wird, um das Maß a über die Oberfläche 30 des Grundgehäuses 12 über. Das Anlagebauteil 24 weist ein Außengewinde 34 auf, über welches es in ein am Grundgehäuse 12 vorgesehenes Innengewinde 36 am Grundgehäuse 12 eingeschraubt ist. Zum Einschrauben des Anlagebauteils 24 in das Gehäuse 12 weist das Anlagebauteil 24 im Ausgangszustand in seinem radial inneren Bereich einen Schlüsselabschnitt 38 auf, der in Figur 7 deutlich zu erkennen ist. Nach dem Einschrauben des Anlagebauteils 24 in das Grundgehäuse 12 wird dieser Schlüsselabschnitt entfernt, beispielsweise durch Ausfräsen oder Ausdrehen. Nach dieser Bearbeitung weist das Anlagebauteil 24 im radial inneren Bereich eine umlaufende Konusfläche 40 auf, wie sie in den beiden rechten Abbildungen in Figur 7 bzw. im Schnitt in Figur 3 und 4 deutlich zu erkennen ist.

Über die Konusfläche 40 wird der Spannbolzen 16 beim Einführen in die Einführöffnung 14 zentriert. Beim Stand der Technik kommt es hierbei regelmäßig zum Kontakt zwischen dem Spannbolzen 16 und dem Anlagebauteil 24, so dass ein reproduzierbares, positionsgenaues Spannen unter Umständen nicht mehr gewährleistet werden kann.

Dadurch, dass das Anlagebauteil 24 aus einem vergleichsweise harten Material besteht, kann beim Einführen des Spannbolzens in die Einführöffnung Verschleiß unterbunden werden. Das Anlagebauteil 24 ist in das Grundgehäuse 12 so eingeschraubt, dass das Grundgehäuse 12 im Bereich des Anlagebauteils 24 elastisch nachgiebig vorgespannt ist. Die aus der Vorspannung resultierende Vorspannkraft ist dabei vorzugsweise größer als eine aus der im verriegelten Zustand vorhandenen Einzugskraft resultierende Gegenkraft. Dadurch kann eine unerwünschte elastische Verformung der Spannaufnahme 10 verringert oder gar verhindert werden.

Wie insbesondere aus Figur 4 deutlich wird, weist das ringartig ausgebildete Anlagebauteil 24 Luftleitungen 42 auf, durch welche Druckluft zum Freiblasen des dem Spannbolzen 16 und dem Gegenstand 18 zugewandten Bereich des Anlagebauteils 24 zuleitbar ist. Dazu weist das Anlagebauteil 24 auf seiner axialen Unterseite mit einer Luftzuführung 44 korrespondierende Lufteinlassöffnungen 46 und auf der radialen Innenseite sowie auf der axialen Oberseite mit den Lufteinlassöffnungen 46 verbundene Luftauslassöffnungen 48 auf.

Bei Druckbeaufschlagung der Luftzuführung 44 mit Druckluft strömt folglich die Druckluft aus den Luftauslassöffnungen 48 aus. Dadurch kann das Anlagebauteil 24 von Medien, insbesondere von Spänen, befreit werden.

Wie aus den Figuren 1, 2 und 3 deutlich wird, sind insgesamt zwei Auflagebauteile 26 vorgesehen, die hülsenartig ausgebildet sind. Insbesondere aus dem Schnitt gemäß Figur 3 wird deutlich, dass diese hülsenartigen Anlagebauteile 26, genauso wie die Anlagebauteile 22 und 24, um das Maß a über die Oberfläche 30 des Grundgehäuses 12 überstehen. Die jeweils radial innen liegende Seite 50 der Anlagebauteile 26 ist leicht konusförmig ausgebildet. Die Anlagebauteile dienen dabei als Zentrierhülsen zur Aufnahme von Zentrierzapfen, die am Gegenstand 18 angeordnet sind (und in den Figuren nicht gezeigt sind).

Dadurch, dass die Anlagebauteile 22, 24 und 26 aus einem härteren Material ausgebildet sind, als das Grundgehäuse 12, wird ein positionsgenaues Spannen auch nach längerem Einsatz der Spannaufnahme gewährleistet.

## Patentansprüche

1. Spannaufnahme (10), insbesondere Nullpunktspannaufnahme, zum Spannen eines Gegenstandes (18), mit einem Grundgehäuse (12), das eine dem zu spannenden Gegenstand (18) zugewandte Oberfläche (30) aufweist, mit einer in der Oberfläche (30) im Grundgehäuse (12) vorgesehenen Einführöffnung (14) zum Einführen eines am Gegenstand (18) anordenbaren Spannbolzens (16), mit im Grundgehäuse (12) angeordneten, verlagerbaren Verriegelungselementen (20) zum Einziehen des Spannbolzens (16) in die Einführöffnung (14) und zum Verriegeln des Spannbolzens (16) ein einer Verriegelungslage, und mit am Grundgehäuse (12) vorgesehenen Anlageabschnitten zur positionsgenauen Anlage des Gegenstandes (18) und damit zum positionsgenauen Spannen in der Verriegelungslage, **dadurch gekennzeichnet, dass** wenigstens ein Anlageabschnitt als vom Grundgehäuse (12) separat hergestelltes Anlagebauteil (22, 24, 26) ausgebildet ist, in einer am Grundgehäuse vorgesehenen Ausnehmung (28) angeordnet ist, wenigstens geringfügig über die Oberfläche (30) des Grundgehäuses (12) übersteht und wenigstens in den Bereichen, in denen der Gegenstand zum Anliegen kommt aus einem Material besteht, das härter ist als das Material des Grundgehäuses (12).

2. Spannaufnahme (10) nach Anspruch 1, **dadurch gekennzeichnet, dass** das Grundgehäuse (12) aus Aluminium und das wenigstens eine Anlagebauteil (22, 24, 26) aus gehärteten Stahl sind.

3. Spannaufnahme (10) nach Anspruch 1 oder 2, **dadurch gekennzeichnet, dass** wenigstens ein Anlagebauteil (24, 26) einen Einführkonus zur Einführung des Spannbolzens (16) oder eines Zentrierbolzens aufweist.

4. Spannaufnahme (10) nach Anspruch 1, 2 oder 3, **dadurch gekennzeichnet, dass** wenigstens ein Anlagebauteil (22, 24, 26) in eine am Grundgehäuse vorgesehene Ausnehmung (28) eingeschraubt, eingepresst und/oder eingeklebt ist.

5. Spannaufnahme (10) nach einem der Ansprüche 1 bis 4, **dadurch gekennzeichnet, dass** wenigstens ein Anlagebauteil (22, 24, 26) Luftleitungen (42) aufweist, durch welche Druckluft zum Freiblasen des dem Gegenstand (18) zugewandten Bereichs des Anlagenbauteils (22, 24, 26) leitbar ist.

6. Spannaufnahme (10) nach Anspruch 5, **dadurch gekennzeichnet, dass** auf der axial unteren Seite des Anlagebauteils (24) mit einer Luftzuführung (44) korrespondierende Lufteinlassöffnungen (46) und dass auf der radialen Innenseite und/oder auf der axialen Oberseite mit den Lufteinlassöffnungen (46) verbundene Luftauslassöffnungen (48) vorgesehen sind.

7. Spannaufnahme (10) nach einem der vorherigen Ansprüche, **dadurch gekennzeichnet, dass** wenigstens ein Anlagebauteil (22, 24, 26) als stift-, hülsen- oder kappenartiges Anlagebauteil gebildet ist.

8. Spannaufnahme (10) nach einem der vorherigen Ansprüche, **dadurch gekennzeichnet, dass** wenigstens ein Anlagebauteil (24) von einem am Grundgehäuse (12) angeordneten, die Einführöffnung umgebenden Ringelement gebildet ist.

9. Spannaufnahme (10) nach Anspruch 8, **dadurch gekennzeichnet, dass** das Ringelement (24) mittels eines Gewindes (34, 36) in das Grundgehäuse (12) eingeschraubt ist.

10. Spannaufnahme (10) nach Anspruch 8 oder 9, **dadurch gekennzeichnet, dass** das Ringelement (24) in das Grundgehäuse (12) so eingeschraubt ist, dass das Gehäuse (12) im Bereich des Ringelements (24) elastisch nachgiebig vorgespannt wird.

11. Spannaufnahme (10) nach Anspruch 10, **dadurch gekennzeichnet, dass** die aus der Vorspannung resultierende Vorspannkraft größer ist als eine aus der Einzugskraft resultierende Gegenkraft.

12. Spannaufnahme (10) nach einem der Ansprüche 8 bis 11, **dadurch gekennzeichnet, dass** das Ringelement (24) derart ausgebildet ist, dass es zum Einschrauben in den Grundkörper (12) im radial inneren Bereich einen Schlüsselabschnitt (38) zum Ansetzen eines Werkzeugs aufweist, und dass nach erfolgtem Einschrauben des Ringelements (24) der Schlüsselabschnitt (38) entfernt wird.

## Claims

1. A clamping receptacle (10), in particular a zero-point clamping receptacle, for clamping an object (18), having a basic housing (12) that has a surface (30) oriented toward the object (18) to be clamped, having an introduction opening (14) provided in the surface (30) in the basic housing (12) for introducing a clamping bolt (16) that can be located on the object (18), having displaceable locking elements (20), located in the basic housing (12), for pulling the clamping bolt (16) into the introduction opening (14) and for locking the clamping bolt (16) in a locking position, and having supporting portions, provided on the basic housing (12), for positionally precise support of the object (18) and thus for positionally precise clamping in the locking position, **characterized in that** at least one supporting portion is embodied as an supporting component (22, 24, 26) produced separately from the basic housing (12), is located in a recess (28) provided on the basic housing, protrudes at least slightly past the surface (30) of the basic housing (12), and at least in the regions in which the object comes to rest comprises a material that is harder than the material of the basic housing (12).

2. The clamping receptacle (10) of claim 1, **characterized in that** the basic housing (12) is of aluminum, and the at least one supporting component (22, 24, 26) is of hardened steel.

3. The clamping receptacle (10) of claim 1 or 2, **characterized in that** at least one supporting component (24, 26) has an introducer cone for introducing the clamping bolt (16) or a centering bolt.

4. The clamping receptacle (10) of claim 1, 2 or 3, **characterized in that** at least one supporting component (22, 24, 26) is screwed, press-fitted and/or glued into a recess (28) provided on the basic housing.

5. The clamping receptacle (10) of one of claims 1 through 4, **characterized in that** at least one supporting component (22, 24, 26) has air ducts (42), through which compressed air can be conducted to blow clear the region of the supporting component (22, 24, 26) that is oriented toward the object (18).

6. The clamping receptacle (10) of claim 5, **characterized in that** on the axially lower side of the supporting component (24), air inlet openings (46) corresponding with an air supply duct (44) are provided, and that on the radially inner side and/or on the axial upper side, air inlet openings (48) communicating with the air inlet openings (46) are provided.

7. The clamping receptacle (10) of one of the foregoing claims, **characterized in that** at least one supporting component (22, 24, 26) is formed as a pinlike, sheathlike or caplike supporting component.

8. The clamping receptacle (10) of one of the foregoing claims, **characterized in that** at least one supporting component (24) is formed by an annular element located on the basic housing (12) and surrounding the introduction opening.

9. The clamping receptacle (10) of claim 8, **characterized in that** the annular element (24) is screwed into the basic housing (12) by means of a thread (34, 36).

10. The clamping receptacle (10) of claim 8 or 9, **characterized in that** the annular element (24) is screwed into the basic housing (12) in such a way that the housing (12) is elastically resiliently prestressed in the vicinity of the annular element (24).

11. The clamping receptacle (10) of claim 10, **characterized in that** the prestressing force resulting from the prestressing is greater than a contrary force resulting from the pulling-in force.

12. The clamping receptacle (10) of one of claims 8 through 11, **characterized in that** the annular element (24) is embodied such that for screwing into the base body (12), in the radially inner region it has a key portion (38) for placement of a tool, and that once the annular element (24) has been screwed in, the key portion (38) is removed.

## Revendications

1. Logement de serrage (10), en particulier logement de serrage au point zéro, pour le serrage d'un objet (18), comprenant un boîtier de base (12) qui comporte une surface (30) tournée vers l'objet (18) à serrer, un orifice d'introduction (14) ménagé dans la surface (30) dans le boîtier de base (12) pour l'introduction d'un boulon de serrage (16) pouvant être agencé sur l'objet (18), des éléments de verrouillage (20) déplaçables agencés dans le boîtier de base (12), destinés à insérer le boulon de serrage (16) dans l'orifice d'introduction (14) et à verrouiller le boulon de serrage (16) dans une position de verrouillage, et des sections d'appui prévues sur le boîtier de base (12) pour l'appui positionné avec précision de l'objet (18) et donc pour le serrage positionné avec précision dans la position de verrouillage, **caractérisé en ce qu'**au moins une section d'appui est réalisée sous la forme d'une pièce d'appui (22, 24, 26) fabriquée séparément sous la forme du boîtier de base (12), est agencée dans un évidement (28) ménagé sur le boîtier de base, fait saillie au moins légèrement de la surface (30) du boîtier de base (12) et, au moins dans les zones dans lesquelles l'objet vient en appui, est constituée d'un matériau qui est plus dur que le matériau du boîtier de base (12) .

2. Logement de serrage (10) selon la revendication 1, **caractérisé en ce que** le boîtier de base (12) est fait d'aluminium et la ou les pièces d'appui (22, 24, 26) sont faites d'acier trempé.

3. Logement de serrage (10) selon la revendication 1 ou 2, **caractérisé en ce qu'**au moins une pièce d'appui (24, 26) comprend un cône d'introduction pour l'introduction du boulon de serrage (16) ou d'un boulon de centrage.

4. Logement de serrage (10) selon la revendication 1, 2 ou 3, **caractérisé en ce qu'**au moins une pièce d'appui (22, 24, 26) est vissée, enfoncée et/ou collée dans un évidement (28) ménagé sur le boîtier de base.

5. Logement de serrage (10) selon l'une quelconque des revendications 1 à 4, **caractérisé en ce qu'**au moins une pièce d'appui (22, 24, 26) comprend des conduites d'air (42), par lesquelles l'air comprimé peut être guidé pour nettoyer par soufflage la zone de la pièce d'appui (22, 24, 26) tournée vers l'objet (18) .

6. Logement de serrage (10) selon la revendication 5, **caractérisé en ce que** des orifices d'admission d'air (46) correspondant à une arrivée d'air (44) sont ménagés sur la face inférieure axialement de la pièce d'appui (24) et **en ce que** des orifices d'évacuation d'air (48) reliés aux orifices d'admission d'air (46) sont ménagés sur la face intérieure radiale et/ou sur la face supérieure axiale.

7. Logement de serrage (10) selon l'une quelconque des revendications précédentes, **caractérisé en ce qu'**au moins une pièce d'appui (22, 24, 26) est réalisée sous la forme d'une pièce d'appui du type broche, manchon ou capuchon.

8. Logement de serrage (10) selon l'une quelconque des revendications précédentes, **caractérisé en ce qu'**au moins une pièce d'appui (24) est formée par un élément annulaire agencé sur le boîtier de base (12) et entourant l'orifice d'introduction.

9. Logement de serrage (10) selon la revendication 8, **caractérisé en ce que** l'élément annulaire (24) est vissé dans le boîtier de base (12) au moyen d'un filet (34, 36).

10. Logement de serrage (10) selon la revendication 8 ou 9, **caractérisé en ce que** l'élément annulaire (24) est vissé dans le boîtier de base (12) de sorte que le boîtier (12) est précontraint de manière élastiquement flexible dans la zone de l'élément annulaire (24).

11. Logement de serrage (10) selon la revendication 10, **caractérisé en ce que** la force de précontrainte résultant de la précontrainte est supérieure à une force antagoniste résultant de la force d'insertion.

12. Logement de serrage (10) selon l'une quelconque des revendications 8 à 11, **caractérisé en ce que** l'élément annulaire (24) est réalisé de telle manière que, pour le vissage dans le corps de base (12), il présente dans la zone radialement intérieure une section de clavette (38) pour la mise en place d'un outil, et **en ce que**, une fois l'élément annulaire (24) vissé, la section de clavette (38) est retirée.
